# EUROPEAN PATENT APPLICATION

(11) **EP 3 336 934 A1**
(43) Date of publication of application: **20.06.2018**
(21) Application number: 16203936.6
(22) Date of filing: 14.12.2016
(51) Int. Cl.: H01M 2/34, H01M 2/20, H01M 10/658, H01M 10/42

(54) **BATTERY**

(71) Applicant: Lithium Energy and Power GmbH & Co. KG, 70469 Stuttgart (DE)
(72) Inventor: Wille, Christopher, 70563 Stuttgart (DE); Friedrich, Marco, 71638 Ludwigsburg (DE); Hasenkopf, Dirk, 70190 Stuttgart (DE); Ashida, Yuji, 70191 Stuttgart (DE)
(74) Representative: Bee, Joachim

(57) **Abstract**

The invention regards a Battery (1) comprising at least one battery cell (3), and a discharging device (2), wherein the discharging device (2) includes a first contact element (4), and a second contact element (5), wherein the first contact element (4) and the second contact element (5) are connected to respective output terminals (6) and/or electrodes (14) and/or conductive cell bodies (10, 11) of the at least one battery cell (3), wherein an isolating element (7) is provided between the first contact element (4) and the second contact element (5), and comprises two layers of an isolating foil (71), wherein a heating wire (8) is provided between the layers of isolating foils and is adapted to disintegrate the isolating element (7) due to heat, such that the first contact element (4) and the second contact element (5) are electrically connectable due to disintegrating the isolating element (7) due to heat generated via the heating wire (8).

## Description

### Prior art

The invention regards a battery. Particularly, the invention regards a battery comprising a fast discharging device which allows establishing an external shortcut of the battery in order to discharge at least one battery cell of the battery.

From the prior art, batteries particularly designed for use in electric vehicles are known. Such batteries usually have a high energy density in order to store a sufficient amount of energy which could be used for driving the car. However, with increasing energy density, there might be problems regarding safety of the battery. Particularly, in case of internal shortcuts of the battery due to nail puncture or other damages, a huge amount of heat is generated inside the battery or inside one of the battery cells of a battery. This might lead to thermal runaway, a phenomena describing a not controllable exothermic reaction which might cause explosion of the battery or fire.

In order to avoid such behavior, a discharging device based on the antifuse concept is described in DE 10 2012 005 979 A1. Such a discharging device allows providing a low resistance external current path to discharge the battery or at least one battery cell with high currents.

### Disclosure of the invention

The inventive battery is simple to manufacture and low in complexity. Particularly, the discharging device can be activated in a reliable and simply manner in order to establish the external current path shortcutting the battery.

The battery according to the invention comprises at least one battery cell and a discharging device. The discharging device includes a first contact element and a second contact element, as well as an isolating element. The first contact element and the second contact element are connected to respective output terminals and/or electrodes and/or conductive cell bodies of the at least one battery cell. Preferably, the battery comprises several battery cells, which are connected in parallel or in series. The discharging device is adapted to discharge at least one of the battery cells. In order to discharge the cell, a low resistance current path is established via the first contact element and the second contact element. In order to avoid a permanent external shortcut, the isolating element is provided between the first contact element and the second contact element. Particularly, the isolating element comprises two layers of an isolating foil with a heating wire there between. The heating wire allows disintegrating the isolating element due to heat. Disintegrating preferably leads to melting or burning the isolating element. Particularly, the heating wire can be connected to output terminals of the battery or at least one battery cell in order to heat the heating wire due to a current flowing through said heating wire. The first contact element and the second contact element therefore are electrically connectable due to disintegrating the isolating element due to heat generated via the heating wire.

In contrary to the above mentioned antifuse concept described in the prior art, the present invention avoids a reactive foil which has to be activated. The heat is generated by an electric current such that the battery according to the present invention comprises a reliable discharging device and is at the same time low in complexity. Therefore, the battery can be manufactured in a cost efficient manner.

The dependent claims contain advantageous embodiments of the present invention.

In a preferred embodiment, a first solder layer is provided between the isolating element and the first contact element. In the same way, a second solder layer is provided between the isolating element and the second contact element. The first solder element and the second solder element are preferably made of a material having a low melting point, particularly a melting point that can be reached due to heat generated by the heating wire. Hence, disintegrating the isolating element also causes the first solder element and the second solder element to melt such that a soldering process takes place. Preferably, the first contact element and the second contact element are connected in a low resistance way due to the material of the first solder layer and the second solder layer. The first solder layer and the second solder layer preferably comprise a soldering tin.

Particularly, the discharging device is a spacer to mechanically and electrically isolate conductive cell bodies of the battery cell. Preferably, the battery is formed according to the nutshell concept, which comprises two housing halves which are electrically connected to one of the potentials of the battery cells. Therefore, the battery can supply electric energy via the two housing halves. The spacer is provided between the housing halves and therefore can shortcut the housing halve due to discontinuing the electrical isolation via heating the heating wire.

Preferably, the discharging device is glued to each battery cell via electroconductive glue. The electroconductive glue particularly establishes an electrical connection between the battery cell and the discharging device. This allows a cost-efficient and time-saving manufacturing process. Particularly, it is preferable to combine the mechanical connection and the electrical connection between the battery cell and the discharging device. The conductive glue preferably provides a soft layer such that slight relative movement between the battery cell and the discharging device are possible due to deformation of the soft layer.

Particularly, it is preferred to glue the first contact element and the second contact element to respective output terminals and/or conductive cell bodies of the battery cell. The battery cell particularly might be a mar-cell, wherein the discharging device is adapted to the shape of the mar-cell. Since the outer surface of the mar-cell provides different electrical potentials, the discharging device can directly be glued to the outer surface in order to connect the first contact element and the second contact element to respective electrical potentials. In case the battery cell is a nutshell, i.e. the conductive cell bodies are two housing halves, which are isolated from each other and which are connected to different electrical potentials of the battery cell, the discharging device might be glued to the housing halves. Preferably, the discharging device is glued between the two housing halves or is glued to one of the housing halves and contacts the other housing halve.

The battery cell preferably comprises a first conductive cell body and a second conductive cell body with different electrical potentials. The first contact element preferably corresponds to the first conductive cell body and the second contact element is preferably electrically connected to the second conductive cell body. In this case the first conductive cell body and the second conductive cell body preferably are housing halves of the battery cell, which is formed as according to the nutshell concept. The second conductive cell body is separated from the first conductive cell body via the isolating element. Therefore, a permanent external shortcut is prevented. However, the isolating element can be disintegrated in order to establish such external shortcut. Due to combining the first conductive cell body and the first contact element, the battery can be manufactured in a cost-efficient and time-saving manner.

Preferably, a spring element is provided to press the first contact element and the second contact element together. The first contact element and the second contact element are separated by the isolating element but need to be in tight contact in order to establish a low resistance current path. Therefore, the spring element applies pressure to the discharging device in order to achieve said tight contact between the first contact element and the second contact element after the isolating element is disintegrated. In a preferred embodiment, at least one of the conductive cell bodies comprises a spring element. The spring element presses the discharging towards another conductive cell body. Particularly, the second conductive cell body comprises a spring element which presses the second contact element of the discharging device towards the first conductive cell body. Due to the pressure applied by the spring element, the first contact element and the second contact element are pressed together such that a low resistance current path is established after disintegrating the isolating element.

The discharging device is preferably provided between the battery cell and a cooling device. On the one hand, such a design allows cooling the discharging device in case of externally shortcutting the battery cell such that high currents flow through the discharging device. Further, the discharging device is preferably adapted to conduct heat from at least one battery cell to the cooling device. Therefore, the cooling device is adapted to cool both, the battery cells and the discharging device. In a preferred embodiment, the discharging device is separated from the cooling device via an electrically isolating and heat conducting element. The cooling device preferably comprises a cooling plate. The first contact element and/or the second contact element are particularly made from copper or aluminum. Such material allows heat dissipation on the one hand and is commonly employed for electroconductive elements on the other hand. The first contact element and the second contact element therefore allow flows of high currents and dissipation of heat at the same time.

Preferably, the battery comprises at least one aerogel layer. The aerogel layer is provided to thermally isolate the battery cells. In this way, a damaged battery cell does not influence the remaining battery cells due to heat generated in the damaged battery cell. Since the remaining battery cells might be damaged due to excessive heat generated by the damaged cell, the whole battery live can be increased due to the aerogel layer. The aerogel layer preferably houses the remaining components of the battery cell. Particularly, the aerogel layer is part of the housing of the battery cells.

### Description of the drawings

Preferred embodiments will be described together with the attached drawings. In the drawings
- Figure 1: is a schematic view of a battery according to a first embodiment of the invention,
- Figure 2: is a schematic view of a battery according to a second embodiment of the invention,
- Figure 3: is a schematic view of a battery according to a third embodiment of the invention,
- Figure 4: is a schematic view of a battery according to a fourth embodiment of the invention,
- Figure 5: is a schematic view of the discharging device of a battery according to any of the embodiments,
- Figure 6: is a schematic view of the heating wire provided with the discharging device of a battery according to any of the embodiments,
- Figure 7: is a schematic view of the discharging device with isolating element,
- Figure 8: is a schematic view of the discharging device with disintegrated isolating element,
- Figure 9: is a schematic view of a battery according to a fifth embodiment of the invention,
- Figure 10: is a schematic view of the battery according to the fifth embodiment in an enhanced version,
- Figure 11: is a schematic explosion view of a battery according to a sixth embodiment of the invention,
- Figure 12: is a schematic detail view of the battery according to the sixth embodiment of the invention,
- Figure 13: is a schematic explosion view of a battery according to a seventh embodiment of the invention,
- Figure 14: is schematic detail view of the battery according to the seventh embodiment of the invention,
- Figure 15: is schematic cut view of the battery according to the seventh embodiment of the invention,
- Figure 16: is a first schematic explosion view of a battery according to an eighth embodiment of the invention,
- Figure 17: is a second schematic explosion view of the battery according to the eighth embodiment of the invention,
- Figure 18: is a schematic cut view of the battery according to the eighth embodiment of the invention,
- Figure 19: is a schematic explosion view of a battery according to a ninth embodiment of the invention,
- Figure 20: is a schematic detail view of the battery according to the ninth embodiment of the invention, and
- Figure 21: is a schematic cut view of the battery according to the ninth embodiment of the invention.

### Embodiments of the invention

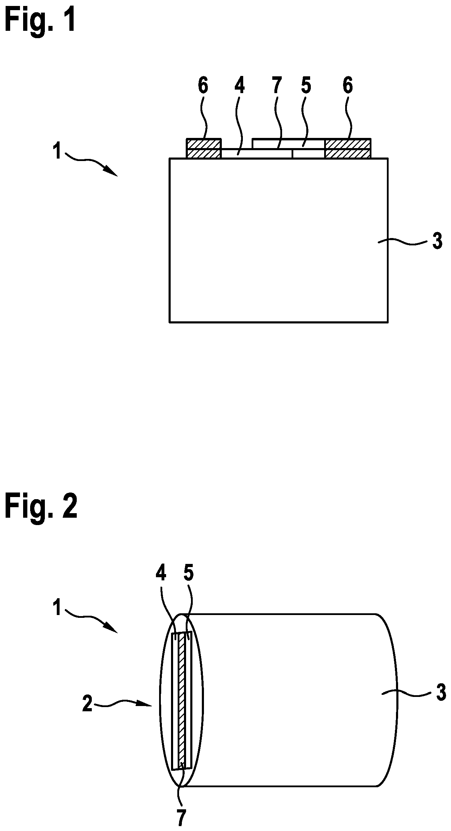

Figure 1 is a schematic view of a battery 1 according to a first embodiment of the invention. The battery 1 comprises at least one battery cell 3 that are connected in parallel or in serial to supply electrical power. The battery 1 further comprises output terminals 6 for outputting electrical power. Each output terminal 6 is electrically connected to a discharging device 2. The discharging device 2 allows to selectively shortcut the output terminals 6 in order to discharge the battery 1.

Particularly, the discharging device 2 comprises a first contact element 4 and a second contact element 5. The first contact element 4 and the second contact element 5 preferably are made from copper or aluminum and are adapted to establish a low-resistance current path. It is advantageous to build the first contact element 4 and the second contact element 5 as busbars.

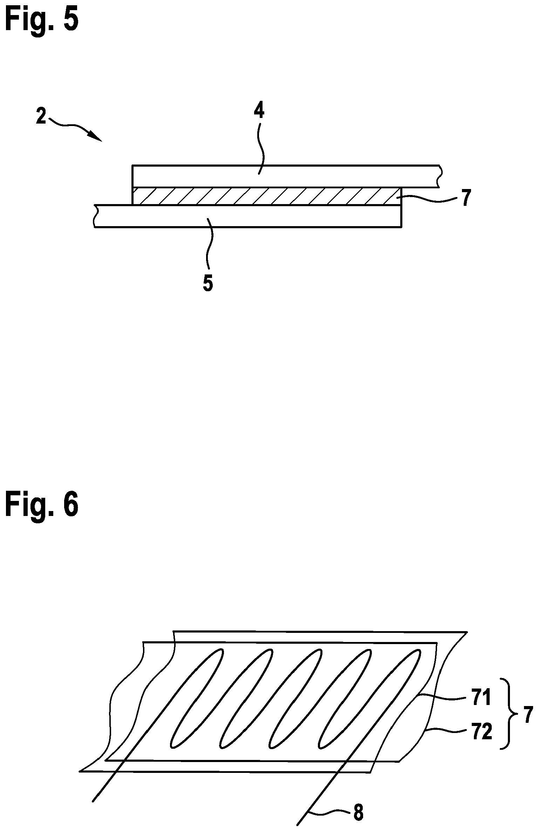

Between the first contact element 4 and the second contact element 5, an isolating element 7 is provided. The isolating element 7 electrically isolates the first contact element 4 from the second contact element 5. In order to establish an external shortcut of the battery 1, the isolating element 7 can be disintegrated which will be explained with respect to figure 6.

In case of an internal shortcut of the battery 1, which might occur in response to damage, the damaged battery cell 3 will generate heat due to this shortcut. In order to avoid high currents flowing inside the battery cell 3 because of the internal shortcut, the discharging device selectively establishes the external shortcut. Since the external shortcut provides a current path with a low electric resistance, a high current can flow between the output terminals 6. Therefore, heat is generated outside the battery cell 3, while the high current leads to a quick discharge of the damaged battery cell 3. As soon as the damaged battery cell 3 is discharged, no heat can be generated in said battery cell 3 any more.

The battery 1 shown in figure 1 is a prismatic cell with two output terminals 6. The output terminals 6 are connected via the discharging device 2. Figure 2 shows a battery 1 according to a second embodiment. The battery 1 shown in figure 2 is a jelly roll. This means that all components of each battery cell 3 are combined in a flat configuration and are then rolled to said jelly roll.

The battery 1 according to the second embodiment has the same discharging device 2 as the battery 1 according to the first embodiment. However, the first contact element 4 and the second contact element 5 are not connected to output terminals 6 but to cell electrodes (not shown) of the battery cells (3). Therefore, the same results as in the first embodiment can be achieved.

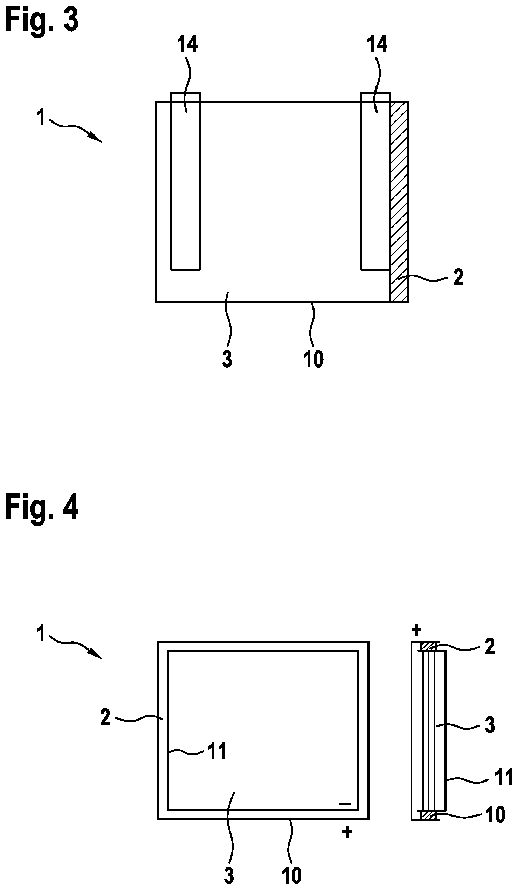

Figure 3 is a schematic view of a battery 1 according to a third embodiment. In this embodiment, the discharging device 2 is provided between an electrode 14, particularly a current collector, and a conductive cell body 10. Preferably, the battery cell 3 supplies different electrical potentials to the conductive cell body 10 and the electrode 14. Preferably, the first contact element 4 of the discharging device (2) corresponds to the conductive cell body 10, while the second contact element 5 corresponds to the electrode 14 or the current collector. This particularly allows providing only the isolating element 7 in between the conductive cell body 10 and the electrode 14. The discharging device 2 hence is adapted to establish a shortcut of the battery 1 such that the battery 1, particularly single battery cells 3, can be discharge.

Figure 4 is a schematic view of a battery 1 according to a fourth embodiment. The battery 1 is formed according to the nutshell concept which means that two housing halves are provided. The two housing haves are a first conductive cell body 10 and are second conductive cell body 11. Both, the first conductive cell body 10 and the second conductive sell body 11, are connected to one of the electrical potentials of the battery cells 3 which are provided between the first conductive cell body 10 and the second conductive cell body 11. The first conductive cell body 10 and the second conductive cell body 11 are sealed in order to generate an encapsulated room for providing the battery cells 3.

The discharging device 2 is preferably provided between the first conductive cell body 10 and the second conductive cell body 11, particularly in the shape of a spacer. The spacer hence allows to physically separate the first conductive cell body 10 and the second conductive cell body 11 but to selectively provide an electrical connection, i.e. a shortcut, between the first conductive cell body 10 and the second conductive cell body 11.

As can be seen, the discharging device 2 can be applied on different known battery designs. In any case, the discharging device 2 allows fast discharge of the battery 1 or battery cell 3 in case of internal shortcuts via an external shortcut. The battery 1 therefore prevents the above mentioned catastrophic behavior as explosion or fire.

The discharging device 2 as adopted in any of the embodiments described above is shown in figure 5. As can be seen, the first contact element 4 and the second contact element 5 both are electrically separated from each other such that no current can flow between the first contact element 4 and the second contact element 5. In order to allow such current, the isolating element 7 has to be disintegrated. To achieve this, the isolating element 7 is provided as shown in figure 6.

Figure 6 is a schematic view of the isolating element 7, which comprises a first foil 71 and a second foil 72. Between the first foil 71 and the second foil 72, a heating wire 8 is placed. The heating wire 8 generates heat due to a current flowing through the heating wire and said heat leads to disintegration of the isolating element 7. Particularly, the isolating element 7 melts or burns. After disintegration of the isolating element 7, the first contact element 4 and the second contact element 5 are electrically connected to each other.

Employing a heating wire for disintegration of the isolating element 7 is a very low cost implementation with low complexity. Further, the whole heating energy can directly be delivered by the battery.

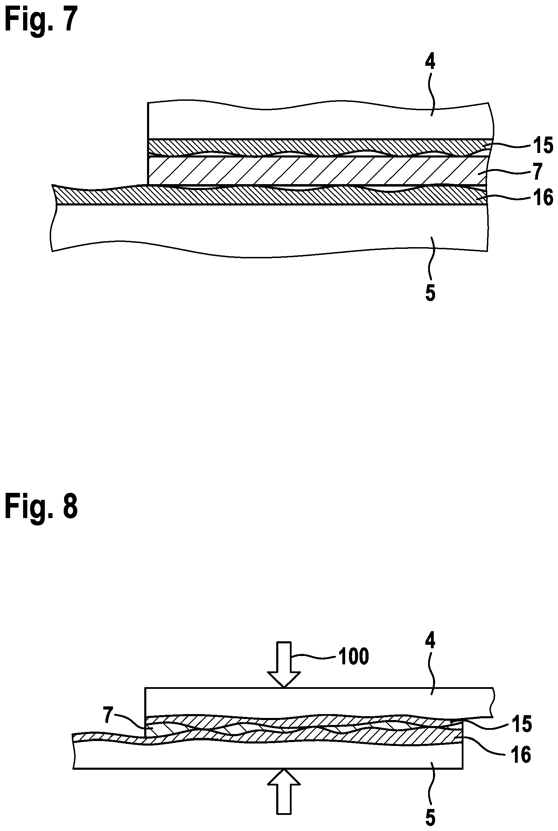

Figure 7 is a schematic cut view of the discharging device. As can be seen, an isolating element 7 prevents the first contact element 4 and the second contact element 5 from touching each other. In order to establish an electrical connection between the first contact element 10 and the second contact element 11, the isolating element 7 has to disintegrate. This can be seen in figure 8. Figure 8 is a schematic view of the discharging device 2 with the first contact element 4 and the second contact element 5 electrically connected. Only some remaining areas comprise molten or burned remains of the isolating element 7. In order to increase the contact surface between the first contact element 10 and the second contact element 11, a first solder layer 15 is provided between the first contact element 4 and the isolating element 7. A second solder layer 16 is provided between the second contact element and the isolating element 7. After disintegrating the isolating element 7, heat generated by the heating wire 8 melts the solder layers 15, 16 such that a soldering process is started. Therefore, the contact quality of the first contact element 4 and the second contact element 5 is improved. Particularly, roughness of the first contact element 4 and/or the second contact element 5 is compensated.

To further enhance the contact quality, the first contact element 4 and the second contact element 5 are pressed to each other via external force 100. The external force 100 preferably is a spring element. Due to pressing via the external force 100, the solder layers 15, 16 are pressed to each other. Since the solder layers 15, 16 are additionally heated via the heating wire 8, a high-quality electrical connection between the first contact element 4 and the second contact element 5 is established due to a soldering process.

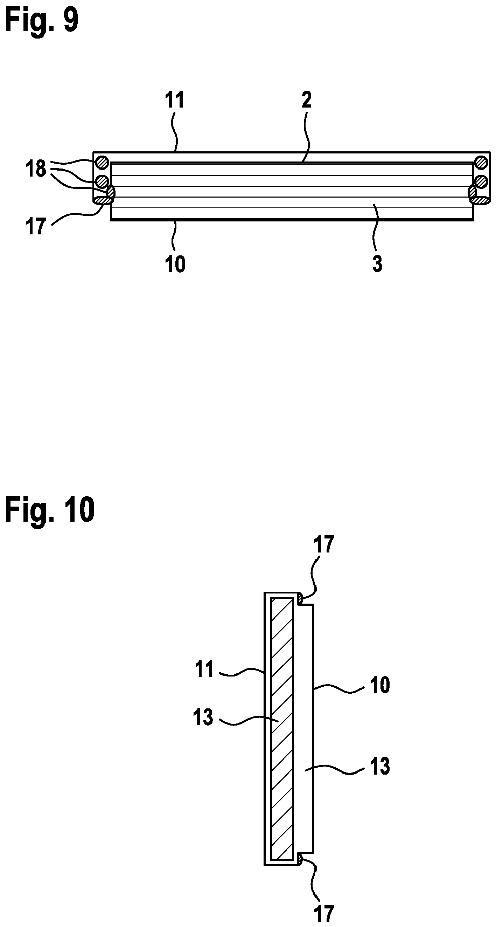

Figure 9 is a schematic view of a battery 1 according to a fifth embodiment of the invention. The battery 1 according to the fifth embodiment is a nutshell battery 1 comprising a first conductive cell body 10 and a second conductive cell body 3. The first conductive cell body 10 and the second conductive cell body 11 are two housing halves that encapsulate the battery cells 3 and are connected to respective one of the electrical potentials of the battery cells 3. The first conductive cell body 10 and the second conductive cell body 11 are further isolated from each other due to isolating layers 17.

The fast discharging device 2 is provided in between the two housing halves and is electrically connected to both, the first conductive cell body 10 and the second conductive cell body 11, via soldering material 18. Particularly, the discharging device 2 is formed as a spacer. As can be seen from figure 9, the spacer is provided along three sides of the first conductive cell body 10 and the second conductive cell body 11, but might also be provided along one or two sides.

Due to the isolating element 7 of the discharging device 2, the first conductive cell body 10 and the second conductive cell body 11 are electrically isolated from each other. However, the discharging device 2 also allows electrical connection between the first conductive cell body 10 and the second conductive cell body 11 for discharging the battery 1 or battery cell 3.

Figure 10 is a schematic view of an enhance version of the battery 1 shown in figure 9. The battery 1 further comprises aerogel layers 13. The aerogel layers 13 thermally isolate the battery 1, preferably each battery cell 3, from other batteries 1 or battery cells 13. This allows avoiding negative impacts of one battery 1 or battery cell 3 to another batter 1 or batter cell 13. Particularly, heat generated in one of the battery cells 3 preferably will have no influence to neighboring battery cells 3 since the heat will not be conducted to the other battery cells 13. Hence, overheating of non-damaged battery cells 3 is avoided. Additionally, heating the isolation device 7 of one discharging device 2 will have no influence to other discharging devices 2. Particularly, heating one of the heating wires 8 will only disintegrate the isolation device 7 or the particular discharging device 2, but will not damage or destroy the isolating elements 7 of other discharging devices 2.

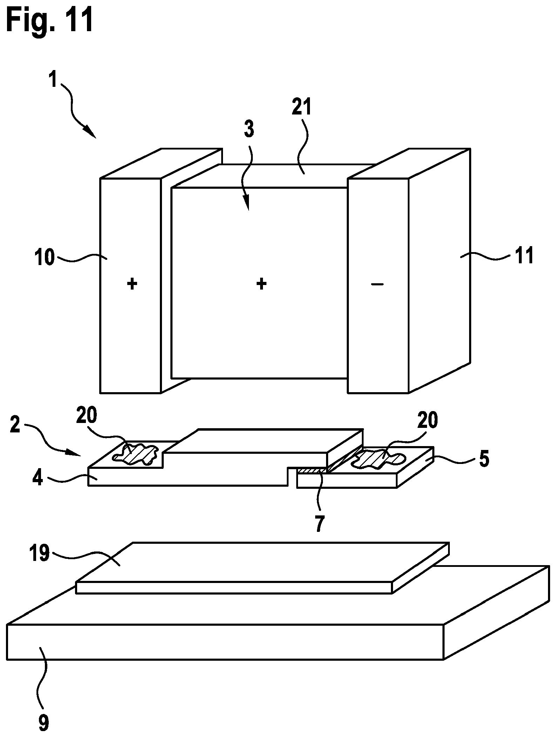

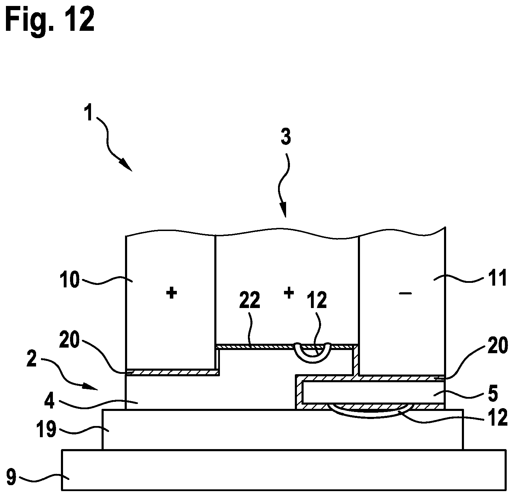

Figure 11 and figure 12 are schematic views of a battery according to a sixth embodiment. Figure 11 is an explosion view while figure 12 is detail view of the discharging device 2 of the battery 1.

In the sixth embodiment, the battery 1 comprises at least one battery cell 3 which is a Mar-cell. Such a battery cell 3 comprises a first conductive cell body 10 and a second conductive cell body 11 with different electrical potentials. Between the first conductive cell body 10 and the second conductive cell body 11, a box 21 is provided. The box may have the same electrical potential than the first conductive cell body 10 or the second conductive cell body 11 or may be an isolating element. In figure 11, the box 21 has the same electrical potential as the first conductive cell body 10.

Mar-cells are simple to manufacture since no ultrasonic welding is required and there is only one lase welding step at the end of manufacturing. Further, the Marcell allows fast charge and fast discharge and is advantageous in view of cooling. Inside the Mar-cell, stacked electrodes or electrodes rolled to jelly rolls might be employed.

A further advantage of the Mar-cells is that the fast discharging device 2 can be attached easily. As shown in figure 11, conductive glue 20 is employed to glue the fast discharging device 2 to the battery cell 3.

Particularly, the discharging device comprises the first contact element 4 and the second contact element 5 which are shaped corresponding to an outer shape of the battery cell 3. The first contact element 4 contacts at least the first conductive cell body 10, while the second contact element 4 contacts at least the second conductive cell body 11. In case the box 21 has the same potential as the first conductive cell body 10 or the second conductive cell body 11, the first contact element 4 or the second contact element 5 can also contact the box 21. As shown in figure 12, an isolating layer 22 is provided between the box 21 and the first contact element 4.

The first contact element 4 and the second contact element 5 are electrically isolated via the isolating element 7, wherein the heating wire 8 (cf. figure 6) can disintegrate the isolating element 7 in order to establish an electrical connection between the first contact element 4 and the second contact element 5. In this way, the battery cell 3 can be shortcut externally.

The first contact element 4 and the second contact element 5 are made from copper. Further, the first contact element 4 and the second contact element 5 are in contact with an electrically isolating heat conducting element 19. The heat conducting element 19 is provided on a cooling device 9, particularly a cooling plate. Hence, the discharging device 2 is placed between the battery cell 3 and the cooling device 9. This allows cooling of the battery cell 3 on the one hand and of the discharging device 2 on the other hand. In case no current flows through the discharging device 2, the discharging device 2 conducts heat generated by the battery cell 3 to the cooling device 3 such that the battery 1 can be cooled in case of normal operation. In case of damage of a battery cell 3 and activation of the discharging device 2, the heat generated by the discharging device due to discharging the battery cell 3 is dissipated via the cooling device 9. The discharging device 2 and the cooling device 9 therefore allow efficient cooling of the battery cell 3 and the battery 1.

As can particularly be seen from figure 12, the discharging device 2 has a very compact shape such that the volume of the battery cell 3 is only slightly enlarged. Further, the discharging device 2 provides a substantially flat surface to mount the battery cell 3 on other components, particularly the cooling device 9. The discharging device 2 therefore does not interfere with further components of the battery 1.

In order to provide a low resistance current path via the first contact element 4 and the second contact element 5, the conductive glue 20 provides a soft layer of glue 20 between the respective contact element 4, 5, and the respective conductive cell body 10, 11. This allows slight movement of the first contact element 4 and the second contact element 5 due to elastic deformation of the soft layer of glue 20. Further, spring elements 12 are provided to press the first contact element 4 and the second contact element 5 together. Therefore, in case the separating isolating element 7 is disintegrated, a close contact between the first contact element 4 and the second contact element 5 is established. This also helps to ensure high quality soldering as described with reference to figures 8 and 9. Particularly, there are spring elements 12 provided between the first contact element 4 and the box applying a force towards the cooling device 9 and between the second contact element 5 and the cooling device 9 or the conducting element 19 applying a force towards the battery cell 3.

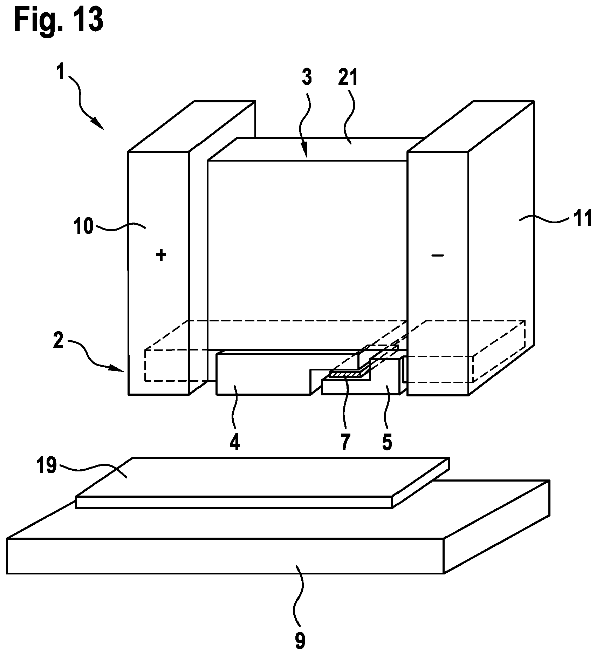

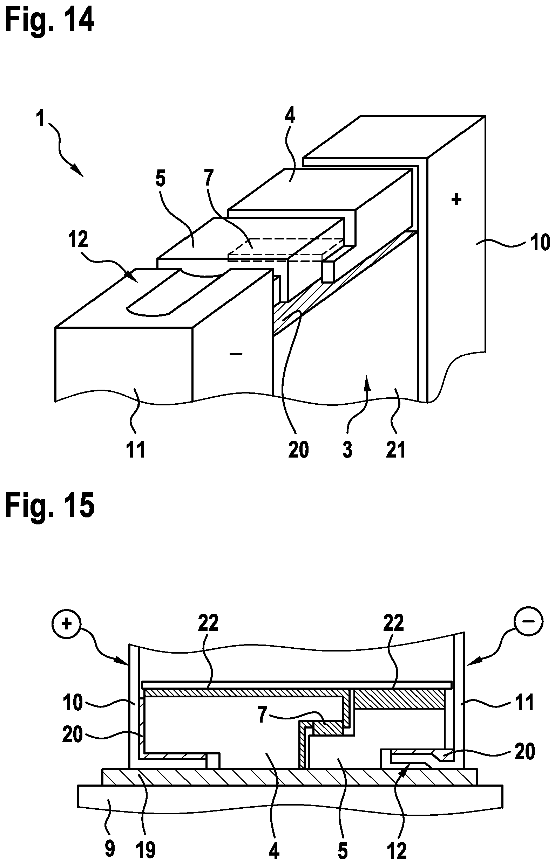

Figures 13, 14, and 15 are schematic views of a battery 1 according to a seventh embodiment. The seventh embodiment is rather similar to the sixth embodiment, since the battery cell 3 again is a Mar-cell. The difference is only the shape of the discharging device 2 and that the discharging device 2 is placed at least partially inside the battery cell 3 and not glued to the battery cell 3 as in the sixth embodiment. Figure 13 is an explosion view, figure 14 is a detail view and figure 15 is a cut view.

As can particularly be seen from figure 15, the first contact element 4 is glued to an inner side of the first conductive cell body 10 and the second contact element 5 is glued to the second conductive cell body 11 such that the discharging device 2 is partly provided inside the battery cell 3.

The first contact element 4 is provided with an isolating layer 22 which ensures that the first contact element is only electrically connected to the first conductive cell body 10 via the conductive glue 20. Further, the first contact element 4 can be brought into electrical contact with the second contact element 5 by disintegrating the isolating element 7. The second contact element 5 also is provided with an isolating layer 22 to ensure that there is - besides from the possible electrical contact with the first contact element 4 - only electrical contact with the second conductive cell body 11 via the conductive glue 20.

Again, a spring element 12 is provided. The spring element 12 is part of the second conductive cell portion 11 and applies a force to the second contact element 5 in a direction towards the first contact element 4. Therefore, after disintegrating the isolating element 7, the second contact element 5 is pressed onto the first contact element 4 to establish a low resistance current path. In this embodiment, the conductive glue 20 does not have to be an elastic layer but can rather establish a hard and tight connection between the first conductive cell body 10 and the first contact element 4 as well as between the second conductive cell body 11 and the second contact element 5. Preferably, at least the isolating layer 22 provided on the second contact element 5 is an elastic layer that allows movement of the second contact element 5 by elastic deformation of the isolating layer 22.

The discharging device 2 is provided between the box 21 and the cooling device 9. Therefore, the first conductive cell body 10 and the second conductive cell body 11 directly contact the cooling device 9. In order to improve the heat dissipation, the electrically isolating heat conducting element 19 is provided between the first conductive cell body 10, the second conductive cell body 11 and the discharging device 2 on the one side and the cooling device 9 on the other side.

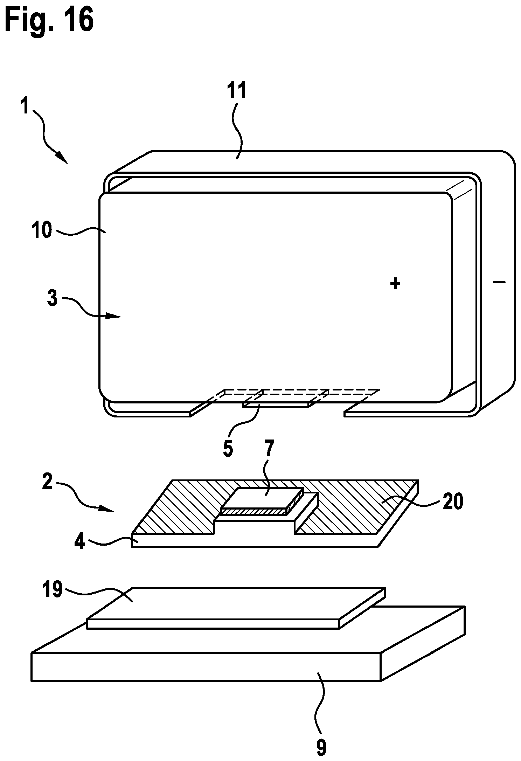

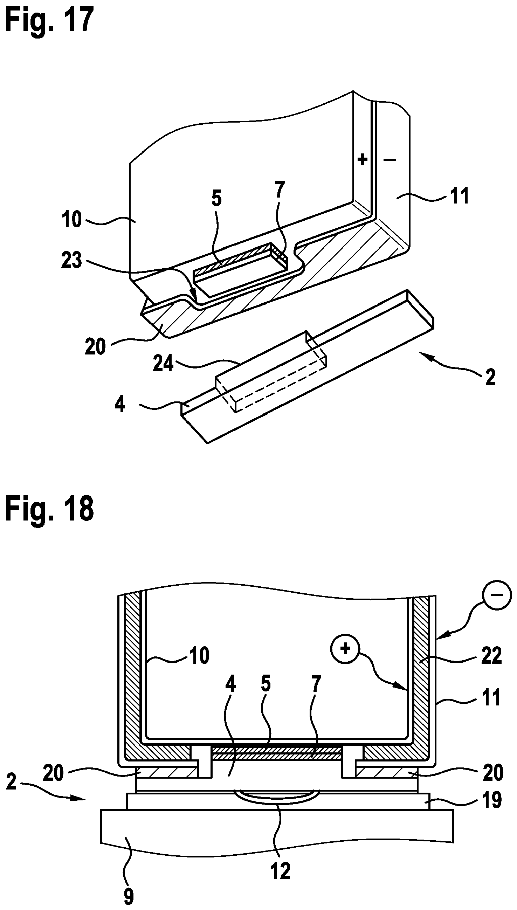

Figures 16, 17, and 18 are schematic views of a battery 1 according to an eighth embodiment. In this embodiment, the battery 1 comprises at least one batter cell 3 according to the nutshell concept. Figure 16 is a first explosion view, figure 17 a second explosion view and figure 18 a cut view.

According to the nutshell concept, the battery cell 3 comprises two housing halves which correspond to the first conductive cell body 10 and the second conductive cell body 11. The two housing halves encapsulate the electrodes of the battery cell 3. Further, the first conductive body 10 and the second conductive body 11 are electrically isolated from each other via isolating layer 22 (cf. figure 18) and have different electrical potentials. Therefore, electric power can be supplied via contact anywhere on each of the first conductive cell body 10 and the second conductive cell body 11.

In the eighth embodiment, the second contact element 5 of the discharging device 2 corresponds to the first conductive cell body 10. The first contact element 4 is glued to the second conductive cell body 11 via said conductive glue 20 and contacts the first cell body 10 via the isolating element 7. The second conductive cell body 11 preferably comprises a cutout portion 23, through which a protrusion 24 of the first contact element 4 protrudes. In case of the isolating element 7 being disintegrated, the first contact element 4, particularly the protrusion 24, comes into contact with the first conductive cell body 10 such that a shortcut between the first conductive cell body 10 and the second conductive cell body 11 is established.

Again, the discharging device is provided between the cooling device 9 and the battery cell 3. Further, the above described electrically isolating heat conducting element 19 is placed between the cooling device 9 and the first contact element 4. Therefore, the discharging device 2 can effectively be cooled and further allows cooling of the battery cell 3.

A spring element 12 is provided in order to apply a force on the first contact element 4 in a direction towards the first conductive cell body 10. Therefor, the first contact element 4 is pressed to the first conductive cell body 10 after disintegrating the isolating element 7 such that a low resistance current path between the first contact element 4 and the first conductive cell body 10, which corresponds to the second contact element 5, is established.

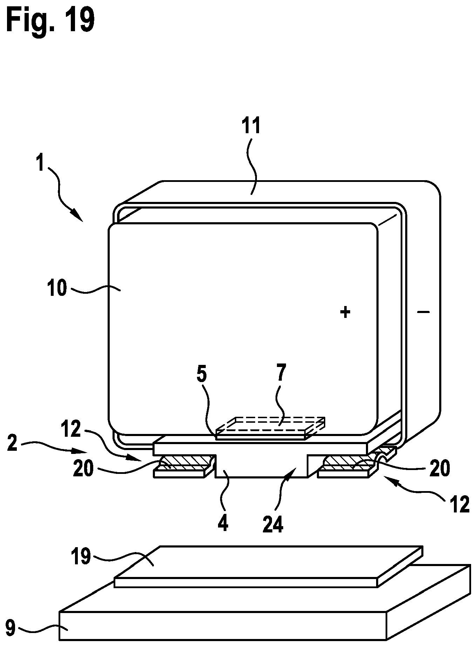

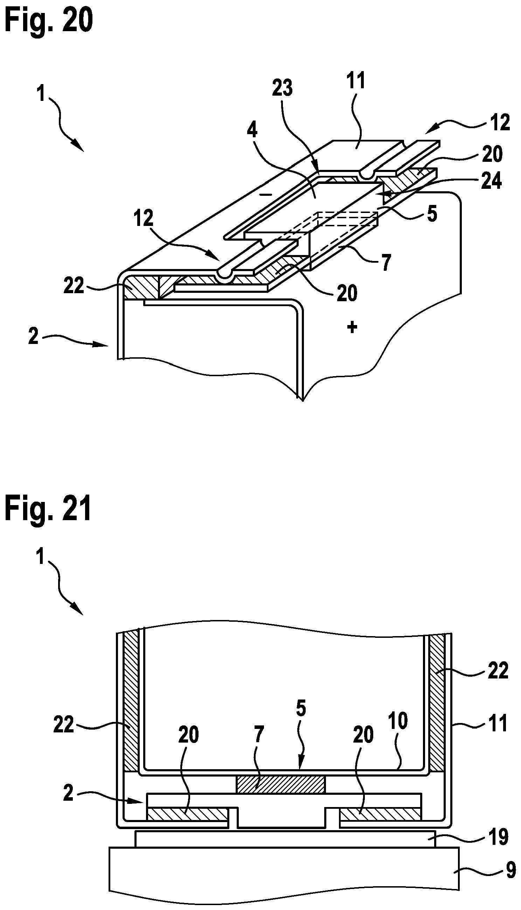

Finally, figures 19, 20, and 21 are schematic views of a battery 1 according to a ninth embodiment of the invention. Figure 19 is an explosion view, figure 20 a detail view, and figure 21 a cut view. In the ninth embodiment, the batter cell 3 is designed according to the nutshell concept and the second contact element 5 of the discharging device 2 corresponds to the first conductive cell body 10, as in the eighth embodiment.

In the ninth embodiment, the second conductive cell body 11 comprises two spring elements 12 with a cutout portion 23 there between. The first contact element 4 of the discharging device 2 is glued to the spring elements 12 via the conductive glue such that the first contact element 4 is partially provided inside the second conductive cell body 11. Further, the contact element 4 is separated from the first conductive cell body 10 via the isolating element 7.

The spring elements 12 provide a pressure towards the first conductive cell body 10 such that the first contact element 4 is held in tight contact with the first conductive cell body 10, which corresponds to the second contact element 5, after the isolating element 7 is disintegrated. Hence, a low resistance current path is established.

The first contact element 4 comprises a protrusion 24 protruding through the cutout portion 23. Therefore, both, the first contact element 4 and the second conductive cell body 11 are in contact with the cooling device 9, preferably via the above described electrically isolating heat conducting element 19. Hence, the heat generated by the discharging device 2 can be dissipated independent fro m the heat generated by the battery cell 3 itself. Therefore, the same advantages as in the seventh embodiments apply.

Regarding all embodiments, the discharging device allows areal contact between the first contact element 4 and the second contact element 5 for establishing the current path after disintegrating the isolating element. The areal contact allows high currents due to a low resistance. Therefore, the battery cell 3 or the battery 1 can be discharged in a fast manner thereby reducing the risk of catastrophic behavior of single battery cells 3 as described above.

## Claims

1. Battery (1) comprising
• at least one battery cell (3), and
• a discharging device (2), wherein the discharging device (2) includes
o a first contact element (4), and
o a second contact element (5),
o wherein the first contact element (4) and the second contact element (5) are connected to respective output terminals (6) and/or electrodes (14) and/or conductive cell bodies (10, 11) of the at least one battery cell (3),
o wherein an isolating element (7) is provided between the first contact element (4) and the second contact element (5), and comprises two layers of an isolating foil (71),
o wherein a heating wire (8) is provided between the layers of isolating foils and is adapted to disintegrate the isolating element (7) due to heat, such that the first contact element (4) and the second contact element (5) are electrically connectable due to disintegrating the isolating element (7) due to heat generated via the heating wire (8).

2. Battery (1) according to claim 1, **characterized in that** a first solder layer (15) is provided between the isolating element (7) and the first contact element (4) and/or a second solder layer (16) is provided between the isolating element (7) and the second contact element (5).

3. Battery (1) according to any one of the previous claims, **characterized in that** the discharging device (2) is a spacer to mechanically and electrically isolate conductive cell bodies (10, 11) of the battery cell (3), wherein the electrical isolation can be discontinued due to heating via the heating wire (8).

4. Battery (1) according to any one of the previous claims, **characterized in that** the discharging device (2) is glued to each battery cell (3) via electroconductive glue (20).

5. Battery (1) according to claim 4, **characterized in that** the first contact element (4) and the second contact element (5) are glued to respective output terminals (6) and/or conductive cell bodies (10, 11) of the battery cell (3).

6. Battery (1) according to any one of the previous claims, **characterized in that** the battery cell (3) comprises a first conductive cell body (10) and a second conductive cell body (11) with different electrical potentials, wherein the first contact element (4) corresponds to the first conductive cell body (10) and the second contact element (5) is electrically connected to the second conductive cell body (11), such that the second conductive cell body (11) is separated from the first conductive cell body (10) via the isolating element (7).

7. Battery (1) according to any one of the previous claims, **characterized by** at least one spring element (12), wherein the spring element (12) presses the first contact element (4) and the second contact element (5) together.

8. Battery (1) according to any one of the previous claims, **characterized in that** the discharging device (2) is provided between the battery cell (3) and a cooling device (9).

9. Battery (1) according to any one of the previous claims, **characterized in that** the first contact element (4) and/or the second contact element (5) are made from copper or aluminum.

10. Battery (1) according to any one of the previous claims, **characterized by** at least one aerogel layer (13) to thermally isolate the battery cells (3).
